# EUROPEAN PATENT SPECIFICATION

(11) **EP 4 121 752 B1**
(45) Date of publication and mention of the grant of the patent: **15.07.2026**
(21) Application number: 21714358.5
(22) Date of filing: 18.03.2021
(51) Int. Cl.: H01J 49/06, H01J 49/42, G01N 27/622

(54) **METHOD AND APPARATUS FOR SEPAREATING IONS BY ION PEAK COMPRESSION OR EXPANSION**
VERFAHREN UND VORRICHTUNG ZUR TRENNUNG VON IONEN DURCH IONENSPITZENKOMPRESSION ODER -EXPANSION
PROCÉDÉ ET APPAREIL DE SÉPARATION D'IONS PAR COMPRESSION OU EXPANSION DE PICS D'IONS

(30) Priority: 18.03.2020 GB 202003890
(43) Date of publication of application: 25.01.2023
(73) Proprietor: Micromass UK Limited, Cheshire SK9 4AX (GB)
(72) Inventor: LANGRIDGE, David J., Macclesfield Cheshire SK10 5RE (GB); GILES, Kevin, Stockport Cheshire SK6 7HL (GB)
(74) Representative: Dehns
(86) International application number: PCT/GB2021/050678
(87) International publication number: WO 2021/186184

(56) References cited:
- WO-A1-2017/200695
- US-A1- 2004 031 920
- US-A1- 2011 220 790
- US-A1- 2017 125 229
- US-A1- 2019 237 319
- GARIMELLA SANDILYA V. B. ET AL: "Squeezing of Ion Populations and Peaks in Traveling Wave Ion Mobility Separations and Structures for Lossless Ion Manipulations Using Compression Ratio Ion Mobility Programming", ANALYTICAL CHEMISTRY, vol. 88, no. 23, 2 November 2016 (2016-11-02), US, pages 11877 - 11885, XP055796646, ISSN: 0003-2700, Retrieved from the Internet <URL:https://pubs.acs.org/doi/pdf/10.1021/acs.analchem.6b03660> DOI: 10.1021/acs.analchem.6b03660

## Description

### FIELD OF THE INVENTION

The present invention relates generally to mass and/or mobility spectrometers and more specifically to a system and method that spatially compresses or expands ion peaks.

### BACKGROUND

Closed-loop ion mobility separator (IMS) devices are known. The closed-loop enables the ion mobility separation path length to be made relatively long, by cycling ions around the loop multiple times. This allows the IMS device to have a relatively high ion mobility resolution, since resolution scales as the square root of the separation path length. However, whilst in principle ions can be driven around the IMS device as many times as desired in order to increase the separation path length, the maximum mobility resolution of the IMS device is still limited by diffusional broadening of the ion mobility peaks. In other words, the length of the IMS device over which ions of any given mobility occupy will increase as the ions travel along the IMS device due to diffusion of the ions. This spatial length increases during the mobility separation until no further useful mobility separation can be obtained, thereby limiting mobility resolution. Furthermore, highly diffuse ion peaks can make ion detection challenging and can reduce signal to noise levels.

An approach for spatial and temporal gas-phase ion population manipulation, where ion distributions in ion mobility separations are collapsed into tighter packets using a stuttered or intermittently halted travelling wave is disclosed in GARIMELLA SANDILYA V. B. ET AL, Anal. Chem. 2016, 88, 11877-11885.

Methods and apparatus for ion compression and/or separation are also disclosed in WO 2017200695 A1, US 2011220790 A1, US 2004031920 A1, US 2019237319 A1, and US 2017125229 A1.

### SUMMARY

From a first aspect the present invention provides a method as claimed in claim 1.

Ions having any given value of the physicochemical property tend to spatially diffuse as they pass along the ion guide. Embodiments of the present invention counteract this diffusion by spatially compressing the ions. For example, controlling the second region of the ion guide so as to spatially compress ions having any given physicochemical property value may reduce the spatial overlap between ions of different physicochemical property values at locations downstream of the second region. This enhances the ability of the method to resolve ions of different physicochemical property values. Spatially compressing the ion packets may also help improve detection or analysis of the ions at a downstream detector or analyser, e.g. mass or mobility analyser.

Arrangements that are outside of the scope of this invention have been contemplated in which a DC voltage is repeatedly travelled along an ion guide, but wherein the DC voltage is intermittently stopped in a downstream portion of the ion guide. This causes ions to pile up at the upstream edge of the downstream portion during the durations that the DC voltage has been stopped, causing the ions to be compressed. The DC voltage in the downstream region is then moved in the downstream direction again, before being stopped and the compression process repeated. However, intermittently stopping the DC voltage in this manner is relatively difficult to implement, e.g. as compared to changing the amplitude of the travelling DC voltage in order to perform compression. Also, the different levels of compression that can be selected by using the technique of intermittently stopping the travelling DC voltage so that the ions pile up are limited. In contrast, in the present invention the amplitude, speed, or frequency with which the transient DC voltage is travelled along the second region (relative to the first region) is changed in order to perform the compression and so enable the level of compression to be selected from a continuum of values.

The transient DC voltage is successively applied to electrodes of the ion guide so as to generate a DC potential barrier that moves along the ion guide, thereby causing the ions that are radially confined within the ion guide to be separated according to the physicochemical property. It is to be noted that the step of travelling the transient DC voltage along the ion guide may comprise successively applying the transient DC voltage to each and every one of the axially spaced electrodes. Alternatively, the transient DC voltage may be successively applied only to every nth electrode that is downstream of the electrode that the transient DC voltage was last applied to, where n is an integer greater than 1 (e.g. only applied to alternate axially spaced electrodes).

It is also contemplated that the transient DC voltage may be simultaneously applied to a group of multiple electrodes at any given time, and the transient DC voltage may be sequentially applied to different groups of multiple electrodes at different respective times such that the transient DC voltage moves along the ion guide. Each group of electrodes may be consecutive electrodes of the ion guide. For example, the transient DC voltage may be simultaneously applied to a group of four consecutive electrodes at any one time (e.g. 11110000), and the transient DC voltage may be applied to different groups of four electrodes at different times (e.g. 00111100 and then 00001111).

The properties of the transient DC voltage, such as amplitude and speed/frequency of travel for example, may be such that each time the transient DC voltage is travelled along the ion guide it urges ions having different values of the physicochemical property along the ion guide by different amounts. As the transient DC voltage is repeatedly travelled along the ion guide, this causes ions having different values of the physicochemical property to be separated more each time the transient DC voltage is travelled along the ion guide. In other words, although the transient DC voltage may pass all of the ions within the ion guide during any given pass along the ion guide, it will urge different ions along the ion guide by different amounts and hence separate them.

Each time the transient DC voltage is travelled along the ion guide, the transient DC voltage is successively applied to electrodes along the first region of the ion guide so that the transient DC voltage moves along the first region of the ion guide.

The transient DC voltage may be caused to move along the first region of the ion guide, optionally along the entirety of the first region, with said substantially constant speed.

Each time the transient DC voltage is travelled along the ion guide, the transient DC voltage is successively applied to electrodes along the first region of the ion guide such that the transient DC voltage passes through the first region at the first speed; and the transient DC voltage may be applied to each of these electrodes for substantially the same period of time when the transient DC voltage is being travelled along the first region.

In the first aspect of the present invention, the ion guide comprises a plurality of electrodes spaced along its longitudinal axis and each time the transient DC voltage is travelled along the ion guide, the transient DC voltage may be successively applied to different electrodes, or successively applied to different groups of multiple electrodes, along the second region of the ion guide so that the transient DC voltage moves along the second region of the ion guide with a substantially constant speed.

The transient DC voltage may be caused to move along the entirety of the second region with said substantially constant speed.

It is contemplated that multiple transient DC voltages may be simultaneously applied to multiple adjacent axially spaced electrodes, and these multiple transient DC voltages may be moved along the ion guide together in the same manner.

The ion guide comprises a plurality of electrodes spaced along its longitudinal axis and each time the transient DC voltage is travelled along the ion guide, the transient DC voltage may be successively applied to different electrodes along the second region of the ion guide, or successively applied to different groups of multiple electrodes along the second region of the ion guide, such that the transient DC voltage passes through the second region; and wherein: (i) the transient DC voltage is applied to each of said different electrodes, or each of said groups of multiple electrodes, for substantially the same period of time, optionally during the entirety of the period that the transient DC voltage is travelled along the second region; and/or (ii) the duration of time between the transient DC voltage being applied to any given one of the electrodes in the second region and the next electrode in the second region that it is applied to is substantially the same whilst the transient DC voltage moves along the second region of the ion guide; and/or (iii) the duration of time between the transient DC voltage being applied to any given one of the groups of electrodes in the second region and the next group of electrodes in the second region that it is applied to is substantially the same whilst the transient DC voltage moves along the second region of the ion guide.

In other words, the speed of the transient DC voltage may effectively be constant throughout the entire second region and, for example, does not stop and start.

The spatial compression may be in the direction that the transient DC voltage travels, i.e. in a direction along the ion guide.

In the first mode the amplitude of the transient DC voltage as it travels through the second region of the ion guide may be lower than its amplitude when it travels through the first region of the ion guide so as to perform the step of spatially compressing the ions.

As described above, the transient DC voltage is successively applied to electrodes along the second region of the ion guide. The amplitude of the transient DC voltage may be the same for all of the electrodes that it is applied to as it travels along the second region of the ion guide. Alternatively, the amplitude of the transient DC voltage may be different when it is applied to different ones of the electrodes as it travels along the second region of the ion guide.

In the first mode the speed of the transient DC voltage along the second region may be higher than its speed along the first region so as to cause the step of spatially compressing the ions.

In the first mode, the frequency with which the transient DC voltage travels along the second region may be higher or lower than the frequency with which it travels along the first region so as to cause the step of spatially compressing the ions.

In the first mode, the repeat pattern of the transient DC voltage in the second region of the ion guide may be different to the repeat pattern in the first region of the ion guide. For example, as described above, the transient DC voltage may be simultaneously applied to a group of multiple electrodes at any given time, and the transient DC voltage may be sequentially applied to different groups of multiple electrodes at different respective times such that the transient DC voltage moves along the ion guide. The repeat pattern of the transient DC voltage may differ in the first and second regions of the ion guide by making each of the groups of multiple electrodes in the first region consist of a different number of electrodes to each of the groups in the second region. Therefore, each pass of the transient DC voltage along the first region of the ion guide may comprise simultaneously applying the transient DC voltage to a group of multiple electrodes, and sequentially applying the transient DC voltage to different groups of multiple electrodes at different respective times such that the transient DC voltage moves along the first region of the ion guide, wherein each group of electrodes comprises a first number of electrodes. Each pass of the transient DC voltage along the second region of the ion guide (in the first mode) may comprise simultaneously applying the transient DC voltage to a group of multiple electrodes, and sequentially applying the transient DC voltage to different groups of multiple electrodes at different respective times such that the transient DC voltage moves along the second region of the ion guide, wherein each group of electrodes comprises a second number of electrodes that is different to said first number of electrodes. For example, the transient DC voltage may be simultaneously applied to a group of four consecutive electrodes at any one time in the first region (e.g. 11110000), whereas in the first mode the transient DC voltage may be simultaneously applied to a group of only two consecutive electrodes at any one time in the second region (e.g. 11000000).

A gas may be present in the ion guide with which ions collide when they are urged through the ion guide by the transient DC voltage.

The transient DC voltage may urge ions through a background gas, causing an opposing force on the ions due to drag such that the ions separate according to their mobility through the gas.

It is contemplated that the method may separate ions according to a combination of physicochemical properties, such as a combination of mobility and mass to charge ratio.

The method may further comprise switching to a second mode in which each time the transient DC voltage travels along the second region of the ion guide it has: a third amplitude; and/or third non-zero speed; and/or different frequency to which it is repeatedly travelled along the second region in the first mode; and/or different repeat pattern to in the first mode; so that the spatially compressed ions, having any given value of said physicochemical property, are urged through said second region of the ion guide at a higher average speed than they are urged through the second region in the first mode.

The third amplitude may be higher than the second amplitude and/or the third non-zero speed is lower than the second non-zero speed.

Alternatively, or additionally, the third amplitude may match the first amplitude and/or the third non-zero speed may match the first non-zero speed.

Alternatively, or additionally, said different frequency may match the frequency that the transient DC voltage is travelled along the first region.

Alternatively, or additionally, said different repeat pattern may match the repeat pattern that the transient DC voltage is travelled along the first region.

The second mode may cause ions to separate according to said physicochemical property within the second region of the ion guide at a higher rate than in the first mode.

The method may comprise performing said first mode until a plurality of groups of ions having different respective values of said physicochemical property have entered the second region of the ion guide and have been spatially compressed, and then switching to the second mode whilst the plurality of groups of ions are still located within the second region of the ion guide.

The transient DC voltage may travel along a third region of the ion guide adjacent to and downstream of said second region so as to urge ions having different values of said physicochemical property through said third region with different average speeds.

Ions of any given physicochemical property value may be urged through said third region of the ion guide at a higher average speed than they are urged through the second region, whilst the second region is being operated in the first mode.

The transient DC voltage may cause ions to separate according to said physicochemical property within the third region of the ion guide at a higher rate than within the second region, whilst the second region is being operated in the first mode.

The amplitude of the transient DC voltage in the third region may be higher than the second amplitude and/or the non-zero speed of the transient DC voltage in the third region may be lower than the second non-zero speed. Alternatively, or additionally, the amplitude of the transient DC voltage in the third region may match the first amplitude and/or the non-zero speed of the transient DC voltage in the third region may match the first non-zero speed.

Alternatively, or additionally, the frequency with which the transient DC voltage is travelled along the third region may differ to that with which it is travelled along the second region in the first mode. The frequency with which the transient DC voltage is travelled along the third region may match the frequency with which it is travelled along the first region and/or the frequency with which it is travelled along the second region in the second mode.

Alternatively, or additionally, the repeat pattern with which the transient DC voltage is travelled along the third region may differ to that with which it is travelled along the second region in the first mode. The repeat pattern with which the transient DC voltage is travelled along the third region may match the repeat pattern with which it is travelled along the first region and/or the repeat pattern with which it is travelled along the second region in the second mode.

It is also contemplated that the ion guide may have one or more further region, located downstream of the second and/or third region, in which the ions are spatially compressed again in a manner as has been described above with respect to the second region, i.e. by varying one or more property of the transient DC voltage in that further region.

The ion guide may comprise a fourth region that is adjacent to and downstream of said third region and, in one mode, the transient DC voltage may have an amplitude and/or non-zero speed along a fourth region that is different to its amplitude and/or non-zero speed in the third region so that ions having a given value of said physicochemical property are urged through said fourth region of the ion guide at a lower average speed than they are urged through the third region, thereby causing the ions to be spatially compressed as they pass from the third region of the ion guide to the fourth region.

Alternatively, or additionally, in said one mode, the transient DC voltage may be repeatedly travelled along the fourth region with a frequency that differs from the frequency with which it is repeatedly travelled along the third region so that ions having a given value of said physicochemical property are urged through said fourth region of the ion guide at a lower average speed than they are urged through the third region, thereby causing the ions to be spatially compressed as they pass from the third region of the ion guide to the fourth region.

Alternatively, or additionally, in said one mode, the transient DC voltage may be repeatedly travelled along the fourth region with a repeat pattern that differs from the repeat pattern with which it is repeatedly travelled along the third region so that ions having a given value of said physicochemical property are urged through said fourth region of the ion guide at a lower average speed than they are urged through the third region, thereby causing the ions to be spatially compressed as they pass from the third region of the ion guide to the fourth region.

The fourth region of the ion guide may be operated in multiple modes, in a corresponding manner to that described in relation to the second region of the ion guide.

Accordingly, the method may further comprise switching to another mode in which each time the transient DC voltage travels along the fourth region of the ion guide it has a different amplitude and/or non-zero speed so that the spatially compressed ions, having any given value of said physicochemical property, are urged through said fourth region of the ion guide at a higher average speed than they are urged through the fourth region in said one mode.

The amplitude in said another mode may be higher than the amplitude in said one mode, and/or the non-zero speed in said another mode may be lower than the non-zero speed in said one mode.

The amplitude in said another mode may match the fourth amplitude in the third region of the ion guide and/or the non-zero speed in said another mode may match the fourth non-zero speed in the third region of the ion guide.

Alternatively, or additionally, the method may comprise switching to another mode in which the transient DC voltage is repeatedly travelled along the fourth region of the ion guide with a different frequency to which it is repeatedly travelled along the fourth region in said one mode so that the spatially compressed ions, having any given value of said physicochemical property, are urged through said fourth region of the ion guide at a higher average speed than they are urged through the fourth region in said one mode.

Alternatively, or additionally, the method may comprise switching to another mode in which the transient DC voltage is repeatedly travelled along the fourth region of the ion guide with a different repeat pattern to which it is repeatedly travelled along the fourth region in said one mode so that the spatially compressed ions, having any given value of said physicochemical property, are urged through said fourth region of the ion guide at a higher average speed than they are urged through the fourth region in said one mode.

Said another mode may cause ions to separate according to said physicochemical property within the fourth region of the ion guide at a higher rate than in said one mode.

The method may comprise performing said one mode until a plurality of groups of ions having different respective values of said physicochemical property have entered the fourth region of the ion guide and been spatially compressed, and then switching to said another mode whilst the plurality of groups of ions are still located within the fourth region of the ion guide.

The ion guide may have a further region downstream of the fourth region that is operated in a corresponding manner to said third region.

One or more further ion compression regions may be provided in the ion guide.

The ion guide may be a closed-loop ion guide and the ions may be urged around the closed-loop ion guide by the transient DC voltage a plurality of times.

For example, the closed-loop ion guide may be a circular, oval, rectangular or other shaped ion guide. Alternatively, the closed-loop ion guide may have a tortuous ion guiding path, such as a serpentine shaped ion guiding path configured such that ions can loop around the serpentine path multiple times.

Alternatively, the ions may be driven around the closed-loop ion guide only a single time before being ejected from it.

The ion guide may not be closed-loop but may be an open-ended ion guide, such as a linear ion guide. The ions may be driven through the ion guide only once, or may be reflected back and forth along the ion guide between its two ends whilst the ions separate according to the physicochemical property.

It is contemplated that the ions may be driven through each of the one or more compression regions multiple times, so as to compress the ions each time. For example, the ions may be driven through the second region multiple times, wherein each time the second region is operated in the first and second modes.

Ions may be urged along the ion guide such that the same ions pass through the second region multiple times, and the second region may be operated in the first mode each of said multiple times such that the ions are spatially compressed as they pass into the second region.

The second region may then be switched to the second mode, as discussed above.

The ions may be compressed each and every time that they pass through the second region, or the ions may be compressed only some of the times that they pass through the second region.

After separation of the ions, the ions may be transmitted to a detector. For example, if the physicochemical property is mobility, the mobility of an ion may be determined from the start time that the ions began to be separated in the ion guide and the time at which the ion is detected at the detector.

Alternatively, after separation in the ion guide the ions may be transmitted to a mass analyser so as to analyse the mass to charge ratios of the ions. The separated ions may be fragmented or reacted between the ion guide and the analyser.

Although embodiments have been described that spatially compress groups of ions, it is alternatively contemplated that such groups of ions may be spatially expanded.

Accordingly, from a second aspect the present invention also provides a method as claimed in claim 11.

Embodiments of the present invention spatially expand the group of ions, which may be useful, for example, to reduce problems with dynamic range at a downstream detector or analyser, e.g. mass or mobility analyser.

These embodiments may have the same features described above in relation to the peak compression embodiments (first aspect), except where the ions are expanded in the second and fourth regions, instead of being compressed.

For example, the spatial expansion may be in the direction that the transient DC voltage travels, i.e. in a direction along the ion guide.

In the first mode the amplitude of the transient DC voltage as it travels through the second region of the ion guide may be higher than its amplitude when it travels through the first region of the ion guide so as to perform the step of spatially expanding the ions.

In the first mode, the speed of the transient DC voltage along the second region may be lower than its speed along the first region so as to cause the step of spatially expanding the ions.

In the first mode, the frequency with which the transient DC voltage travels along the second region may be higher or lower than the frequency with which it travels along the first region so as to cause the step of spatially expanding the ions.

The method may further comprise switching to a second mode in which each time the transient DC voltage travels along the second region of the ion guide it has a third amplitude, and/or third non-zero speed, and/or different frequency to which it is repeatedly travelled along the second region, so that the spatially expanded ions, having any given value of said physicochemical property, are urged through said second region of the ion guide at a lower average speed than they are urged through the second region in the first mode. This may be used to halt or reduce the expansion.

The third amplitude may be lower than the second amplitude and/or the third non-zero speed may be higher than the second non-zero speed.

The third amplitude may match the first amplitude and/or the third non-zero speed may match the first non-zero speed.

Said different frequency may match the frequency that the transient DC voltage is travelled along the first region.

The second mode may cause ions to separate according to said physicochemical property within the second region of the ion guide at a lower rate than in the first mode.

The method may comprise performing said first mode until a plurality of groups of ions having different respective values of said physicochemical property have entered the second region of the ion guide and have been spatially expanded, and then switching to the second mode whilst the plurality of groups of ions are still located within the second region of the ion guide.

The transient DC voltage may travel along a third region of the ion guide adjacent to and downstream of said second region so as to urge ions having different values of said physicochemical property through said third region with different average speeds.

Ions of any given physicochemical property value may be urged through said third region of the ion guide at a lower average speed than they are urged through the second region, whilst the second region is being operated in the first mode.

It is also contemplated that the ion guide may have one or more further region, located downstream of the second and/or third region, in which the ions are spatially expanded again in a manner as has been described above with respect to the second region, i.e. by varying one or more property of the transient DC voltage in that further region.

The ion guide may comprise a fourth region that is adjacent to and downstream of said third region and wherein, in one mode, the transient DC voltage has an amplitude and/or non-zero speed along a fourth region that is different to its amplitude and/or non-zero speed in the third region so that ions having a given value of said physicochemical property are urged through said fourth region of the ion guide at a higher average speed than they are urged through the third region, thereby causing the ions to be spatially expanded as they pass from the third region of the ion guide to the fourth region.

Alternatively, or additionally, in said one mode, the transient DC voltage may be repeatedly travelled along the fourth region with a frequency (and/or repeat pattern) that differs from the frequency (and/or repeat pattern) with which it is repeatedly travelled along the third region so that ions having a given value of said physicochemical property are urged through said fourth region of the ion guide at a higher average speed than they are urged through the third region, thereby causing the ions to be spatially expanded as they pass from the third region of the ion guide to the fourth region.

The fourth region of the ion guide may be operated in multiple modes, in a corresponding manner to that described in relation to the second region of the ion guide.

Accordingly, the method may further comprise switching to another mode in which each time the transient DC voltage travels along the fourth region of the ion guide it has a different amplitude and/or non-zero speed so that the spatially expanded ions, having any given value of said physicochemical property, are urged through said fourth region of the ion guide at a lower average speed than they are urged through the fourth region in said one mode.

One or more further ion expansion regions may be provided in the ion guide.

It is contemplated that the ions may be driven through each of the one or more expansion regions multiple times, so as to expand the ion peak each time. For example, the ions may be driven through the second region multiple times, wherein each time the second region is operated in the first and second modes.

Ions may be urged along the ion guide such that the same ions pass through the second region multiple times, and wherein the second region is operated in the first mode each of said multiple times such that the ions are spatially expanded as they pass into the second region.

The second region may then be switched to the second mode, as discussed above.

The ions may be expanded each and every time that they pass through the second region, or the ions may be expanded only some of the times that they pass through the second region.

After separation of the ions, the ions may be transmitted to a detector.

Alternatively, after separation in the ion guide the ions may be transmitted to a mass analyser so as to analyse the mass to charge ratios of the ions. The separated ions may be fragmented or reacted between the ion guide and the analyser.

The present invention also provides a method of ion mobility or mass spectrometry comprising: performing the method as described herein; and detecting or analysing the separated ions, or ions derived from the separated ions.

For the avoidance of doubt, the DC voltages described herein are applied to electrodes of the ion guide.

The present invention also provides apparatus configured to perform any of the methods described herein.

Accordingly, from a third aspect of the present invention an ion separator is provided as claimed in claim 12.

The ion separator is configured to perform any of the methods described herein. For example, the electronic circuitry may be configured to control the one or more voltage supply, in a second mode, such that each time the transient DC voltage travels along the second region of the ion guide it has a third amplitude, and/or third non-zero speed, and/or different frequency and/or different repeat pattern to which it is repeatedly travelled along the second region so that the spatially compressed ions, having any given value of said physicochemical property, are urged through said second region of the ion guide at a higher average speed than they are urged through the second region in the first mode.

According to a fourth aspect of the present invention, an ion separator is provided as claimed in claim 13.

### BRIEF DESCRIPTION OF THE DRAWINGS

Various embodiments will now be described, by way of example only, and with reference to the accompanying drawings in which:
Fig. 1A shows a schematic view of an ion mobility separator (IMS) according to an embodiment of the present invention, Fig. 1B shows a cross-sectional side view of a portion of the IMS device of Fig. 1A, and Figs. 1C and 1D show an orthogonal view and a perspective view of the embodiment of Fig. 1A respectively;
Figs. 2A-2B show schematic representations of an embodiment during compression of two different ion mobility peaks;
Figs. 3-6 show results from a numerical simulation of an embodiment of the ion peak compression technique;
Figs. 7 and 8 show results from a numerical simulation of another embodiment of the ion peak compression technique using a different level of compression;
Fig. 9 shows plots of the mean widths of two ion peaks as a function of separation time in the IMS device for different compression ratios; and
Fig. 10 shows plots of the peak separation as a function of separation time in the IMS device for different compression ratios.

### DETAILED DESCRIPTION

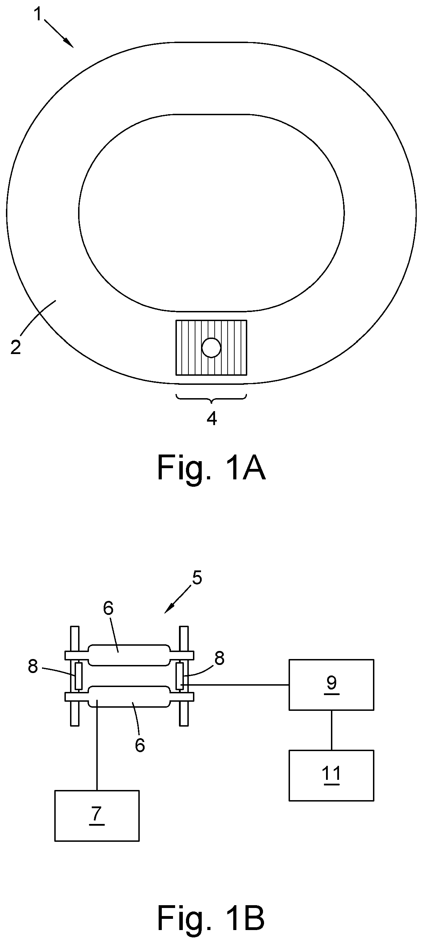

Fig. 1A shows a schematic view of an ion mobility separator (IMS) according to an embodiment of the present invention. The IMS device 1 comprises a closed-loop ion guide 2 around which the ions are guided in use. The ion guide 2 comprises a plurality of electrodes that act to radially confine the ions to an axial path that extends around the closed-loop ion guide 2. The ion guide 2 also comprises electrodes that urge the ions along the axial length of the ion guide 2. The ion guide 2 is filled with a background gas such that as the ions are urged around the ion guide 2 they collide with the gas molecules and separate according to their ion mobilities through the gas (due to drag). The ions may be urged around the closed-loop ion guide 2 once or multiple times before being extracted through an exit region 4. The ions may be urged around the ion guide 2 by applying one or more transient DC voltage that travels axially along the drift cell 2.

Fig. 1B shows a cross-sectional side view of a portion of the ion guide 2 of the IMS device of Fig. 1A. Fig. 1B shows an embodiment of an electrode unit arrangement 5 that may be used to confine ions to the axis of the ion guide 2. At a given point along the axial length of the ion guide 2, the path may be defined between two RF electrodes 6 that are spaced apart in a first direction (at the radially inner and outer sides of the ion guide 2) and two DC electrodes 8 that are spaced in a second, preferably orthogonal, direction (at the top and bottom of the ion guide 2). RF voltages are applied to the RF electrodes 6 so as to confine the ions between the RF electrodes 6, in the first direction. DC voltages are applied to the DC electrodes 8 so as to confine the ions between the DC electrodes 8, in the second direction. Alternatively, RF voltages may be applied to the electrodes 8 so as to confine the ions between the electrodes 8, in the second direction.

The electrode unit 5 is repeated along the axial length of the ion guide 2 such that ions are confined in the ion guide 2 at all points around the ion guide 2, except when ions are ejected from the ion entry/exit region 4, which will be described further below. The electrode units 5 are axially spaced along the ion guiding path and one or more DC voltage may be transiently and successively applied to different electrode units 5 such that a DC potential barrier travels around the ion guide 2 and hence forces the ions around the ion guide 2. The top and bottom sides of the ion guide 2 may be formed from printed circuit boards having the electrodes 8 arranged thereon. Alternatively, or additionally, the radially inner and outer sides of the ion guide 2 may be formed from printed circuit boards having the electrodes 6 arranged thereon.

Although Fig. 1B shows electrodes 6,8 of certain configurations, it is contemplated that other configurations may be used. For example, different shaped electrodes may be used. Alternatively, rather than providing pairs of electrodes 6,8 in each electrode unit 5, the ion guide 2 may be formed by a series of apertured electrodes arranged with their apertures aligned along the longitudinal path through the ion guide 2, i.e. the ion guide may be an ion tunnel or ion funnel such as a stacked ring set of electrodes. Alternatively, the ion guide may be a segmented multipole rod set, such as a segmented quadrupole, hexapole or octopole rod set. RF voltages may be applied to the electrodes so as to radially confine the ions along the path. For example, AC/RF voltages of different phases may be applied to adjacent electrodes, e.g. alternate electrodes may be supplied with opposite phases of an AC/RF voltage.

A mode of operation of the IMS device will now be described, by way of example only. Ions may be introduced into the IMS device, e.g. at an ion entrance 4. AC/RF voltages are applied to AC/RF electrodes 6 by an AC/RF voltage supply 7 so as to confine the ions between these electrodes. DC voltages may be applied to DC electrodes 8 by a DC voltage supply 9 so as to confine the ions between these electrodes. Alternatively, in the embodiments in which the electrodes 8 are RF electrodes, an AC/RF voltage supply supplies AC/RF voltages to electrodes 8 so as to confine the ions between these electrodes. The ions are therefore radially confined along the longitudinal path of the ion guide 2. In order to introduce the ions into the ion guide 2, the radial confinement voltages on some of the electrodes in the ion entrance region 4 may be switched off or reduced.

The DC voltage supply 9 then successively applies a transient DC voltage to the electrodes of different electrode units 5 such that a transient DC potential barrier is travelled along the ion guide 2. For example, the transient DC voltage may be successively applied to the DC electrodes 8 (and optionally the RF electrodes 6) of different electrode units 5. Electronic circuitry 11 is provided to control the timings that the DC voltages are applied to the electrodes. The transient DC potential barrier may urge the ions along as it moves passed them. Ions of different mobilities may be urged by differing amounts by the DC potential barrier as it passes them. One or more such transient DC voltage may be repeatedly travelled around the ion guide 2, causing ions of different mobility to move through the ion guide with different average velocities. The ions are therefore spatially separated according to their mobility. This process may be repeated until the ions have been separated by the desired amount. After this, the ions may be extracted from the IMS device, e.g. at the same location as the ion entrance region 4, or at a different location. In order to extract the ions from the ion guide 2, the radial confinement voltages on some of the electrodes in the ion exit region 4 may be switched off or reduced, or the voltages on the electrodes in this region may be switched so as to provide an electric field that urges the ions in the radial direction and out of the ion guide 2.

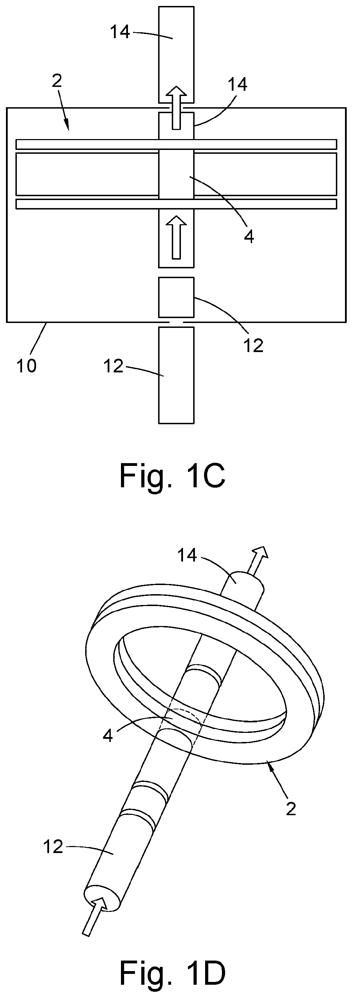

Fig. 1C and Fig. 1D show an orthogonal view and a perspective view of the embodiment of Fig. 1A respectively. The ion guide 2 is arranged inside a chamber 10 that is filled with gas. Ions may be guided into and out of the chamber 10 using RF ion guides 12,14. The RF ion guides 12,14 are also coupled with the ion entry/exit region 4 of the ion guide 2 such that ions can be guided into the ion guide 2 and out of the ion guide 2. In this embodiment, ions are guided into the chamber 10 and into the entry/exit region 4 of the ion guide 2 by input ion guides 12. If the ions are desired to be separated by their ion mobility then the ions are urged in an orthogonal direction to the ion entry direction, by travelling the transient DC voltage around the ion guide 2, so as to drive the ions around the ion guide 2. As the ions pass along the ion path they separate according to their ion mobility through the drift gas that is present in the chamber 10 and hence the ion guide 2. When ions are desired to be extracted from the ion guide 2 they may be ejected in a direction towards the exit RF ion guides 14 (or less desirably in a direction towards the input ion guide 12). The ions are then guided out of the chamber 10 by the exit ion guide 14 (or ion guide 12).

On the other hand, if ion mobility separation of the ions is not required then ion species can be caused to pass from the input ion guide 12 to the output ion guide 14 directly through the entry/exit region 4 of the drift cell 2 and without passing around the drift cell 2. In other words, the drift cell 2 may be operated in a by-pass mode.

In a preferred mode of operation, it is possible to extract ions having a desired range of ions mobilities from the ion guide 2. This is achieved by causing ions to traverse around the ion guide 2 so that they separate and then synchronising the activation of one or more ejection voltages at the ion entry/exit region 4 with the time at which the ions of interest are at the entry/exit region 4. The desired ions are therefore ejected from the ion guide 2 and the other ion species remaining in the ion guide 2 can continue to pass through the ion guide 2 and separate according to ion mobility. Alternatively, the remaining ions may be discarded from the ion guide 2, for example, by removal of the RF voltages from the electrodes 6 such that the ions are no longer confined within the ion guide 2.

The ejected ions having the desired ion mobilities can be immediately transported away from the ion guide 2 to a mass analyser and/or detector. Alternatively, such ions may be trapped in a storage region whilst the next mobility cycle occurs in the ion guide 2 and until more ions of the same ion mobility range are ejected from the ion guide 2 into the storage region. After sufficient mobility cycles have been performed to accumulate the desired number of ions in the storage region, these ions may then be transported to an analyser such as a mass analyser for further analysis, or to a detector. This method may be used to increase the ion signal of the desired ions. Additionally, or alternatively, the desired ions that have been ejected from the ion guide 2 may be fragmented, activated or dissociated and then reintroduced back into the ion guide 2 such that the fragment, activated or product ions can be separated by ion mobility and hence ion mobility analysed.

As described above, the closed-loop ion guide 2 enables the ion mobility separation path length to be made relatively long, by cycling ions around the ion guide 2 multiple times. This allows the IMS device to have a relatively high ion mobility resolution. However, whilst in principle ions can be driven around the ion guide 2 as many times as desired in order to increase the separation path length, the maximum mobility resolution of the IMS device is still limited by diffusional broadening of the ion mobility peaks. In other words, the spatial length of the ion guide 2 over which ions of any given mobility occupy will increase as the ions travel along the ion guide due to their diffusion. This spatial length increases during the mobility separation until no further useful separation can be obtained. Furthermore, highly diffuse ion peaks can make ion detection challenging and can reduce signal to noise levels.

Embodiments of the present invention spatially compress such ion peaks within the ion mobility separator, whilst preserving at least a significant proportion of the mobility resolution of the separator. The ability to compress the ion peaks without excessive loss of mobility resolution allows the ions, in principle, to undergo an unlimited number of passes around the closed-loop IMS device whilst still resolving the ions, thus removing the limitation on the attainable mobility resolution.

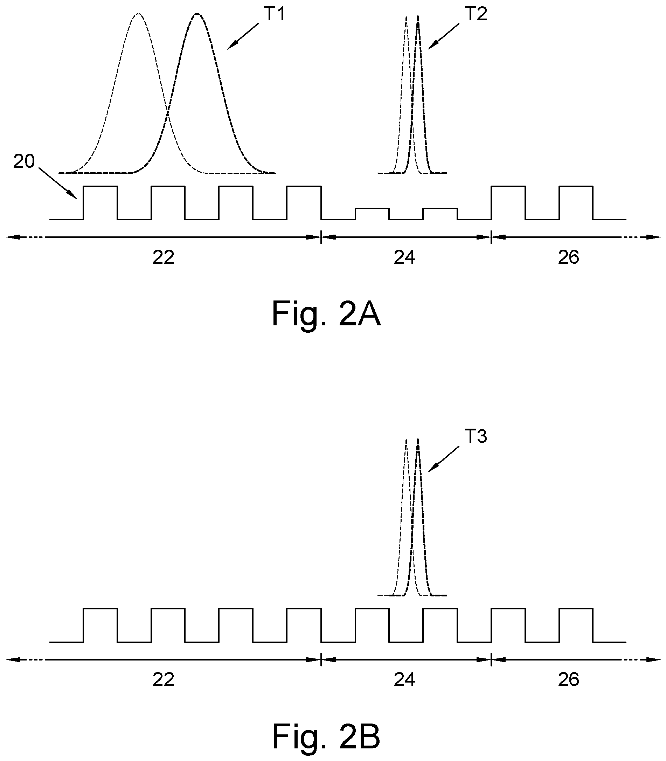

Figs. 2A-2B show schematic representations of an embodiment and how the transient DC voltage 20 is applied so as to affect ions in two different ion mobility peaks. As described above, a transient DC voltage is repeatedly travelled along the ion guide 2, causing ions of different mobilities to travel along the ion guide 2 at different average speeds and hence separate according to their mobility. In the depicted embodiment, the transient DC voltage 20 is travelling to the right, as shown by the arrow. Fig. 2A shows two mobility peaks for ions of two respective mobilities at a first separation time T1 whilst the ions are in a first region 22 of the ion guide 2. In other words, Fig. 2A shows the intensity distribution of two groups of ions having two respective ion mobility values. It can be seen that transient DC voltage causes the two mobility peaks to be partially resolved at time T1. However, as described above, unless measures are taken each peak will broaden due to ion diffusion as the separation process is continued.

In order to counteract this, one or more properties of the transient DC voltage is varied as the transient DC voltage travels through a second region 24 of the ion guide 2 so that ions are urged through this region 24 by the transient DC voltage at a lower average speed than they were urged through the first region 22 of the ion guide 2. Therefore, ions having a first mobility in the leading peak are initially urged through the first region 22 of the ion guide 2 at a first average speed, but are urged through the second region 24 of the ion guide 2 at a lower average speed. Similarly, ions having a second mobility in the trailing peak are initially urged through the first region 22 of the ion guide 2 at a third average speed, but are urged through the second region 24 of the ion guide at a lower average speed. This causes each of the peaks to be spatially compressed in the direction that the ions are driven along the ion guide, as seen at time T2 in Fig. 2A.

In the illustrated embodiment, the spatial compression is achieved by the amplitude of the transient DC voltage 20 being reduced in the second region 24 relative to in the first region 22 of the ion guide 2. However, it is contemplated that the average speeds of the ions may be reduced in the second region 24 so as to compress the peaks by altering the transient DC voltages within the second region 24 in other alternative, or additional, ways. For example, the speed of the transient DC voltage through the second region 24 may differ from the speed of the transient DC voltage through the first region 22 in order to compress the peaks. This may be achieved by controlling the DC voltage supply such that the speed of the transient DC voltage through the second region 24 is higher than its speed through the first region 22. Alternatively, or additionally, the frequency with which the transient DC voltage is repeatedly travelled along the second region 24 may differ to the frequency with which it is travelled along the first region 22 so as to perform the peak compression. These techniques of compressing the mobility peaks are particularly simple from a technical perspective and are also easily controllable so as to provide the desired level of compression. For example, the amplitude and/or speed and/or frequency of the transient DC voltage travelling through the second region 24 may be selected from a continuum of values in order to provide the desired level of peak compression.

Referring to Fig. 2B, once the ions of the ion peaks are entirely within the second region 24 of the ion guide 2, at time T3, the properties of the transient DC voltage passing through the second region 24 may be changed such that the average speed of ions in the leading peak and the average speed of the ions in the trailing peak are increased. Accordingly, the amplitude of the transient DC voltage passing through the second region 24 may be increased, and/or the speed of the transient DC voltage passing through the second region 24 may be varied (e.g. decreased), and/or the frequency with which the transient DC voltage is repeatedly travelled along the second region 24 may be changed. The properties of the transient DC voltage passing through the second region 24 may be changed so as to match the properties of the transient DC voltage passing through the first region 22 of the ion guide 2. The transient DC voltage may also be applied to a third region 26 of the ion guide that is downstream of the second region 22 such that the ions continue to be separated by their mobility as they are urged along the ion guide 2 through the third region 26. The properties of the transient DC voltage in the third region 26 may match those in the first region, e.g. in amplitude and/or speed and/or frequency.

The above-described peak compression technique may be performed within the ion guide 2 as often as is desired. For example, peak compression may performed at the same region 24 of the ion guide 2 (or in a different region) each time that ions pass around the closed-loop ion guide 2. Alternatively, peak compression may be performed multiple times during each cycle that ions pass around the ion guide 2. Alternatively, peak compression may be performed periodically and only after a plurality of cycles around the ion guide 2.

It is desired that the ion peaks pass entirely into the second region 24, but do not leave it, before the properties of the transient DC voltage (e.g. amplitude and/or speed and/or frequency) repeatedly passing through the second region 24 are switched back so as to match the properties in the first region 22 and third region 26 of the ion guide 2. As such, it is desired that the ion peaks do not become excessively long before compression is performed. The amount of compression of an ion peak that is able to be performed by the second region 24 is related to the ratio of the average velocity of those in the first region 22 to the average velocity of those ions in the second region 24 (during the compression mode of the second region 24). The ion peaks may continue to broaden due to diffusion during compression and hence some of the mobility separation may be lost when undergoing compression (in a manner related to the velocity ratio as above).

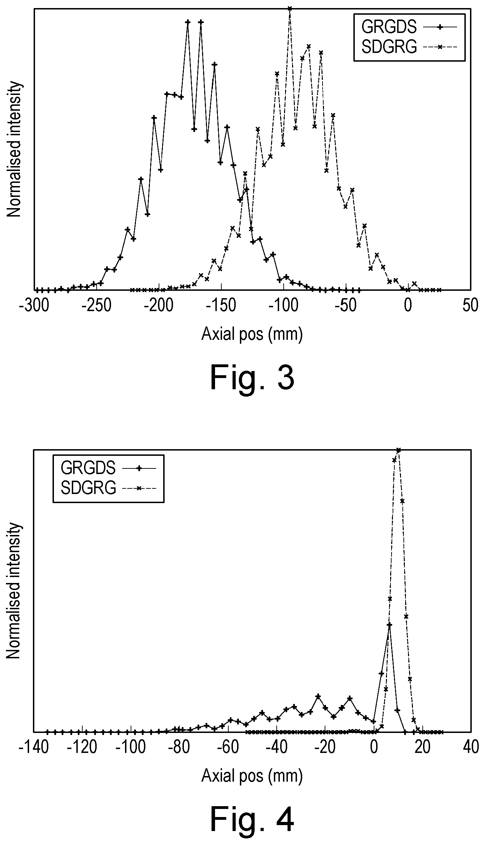

Figs. 3-6 show results from a numerical simulation of the above described compression technique. In this simulation, the ion guide 2 was modelled as a stacked ring ion guide (i.e. ion tunnel ion guide) along which DC travelling voltage was repeatedly travelled so as to separate the ions according to mobility. The gas pressure within the ion guide was modelled as 2.4 torr (320 Pa). The DC travelling voltage was modelled as having an amplitude of 30V outside of the second region 22 and 7.5V inside the second region 22. The DC travelling voltage was modelled as having a speed of 600m/s throughout the entire ion guide 2. The two types of ions modelled were reverse peptide ions (GRGDS and SDGRG), z=+1, having collisional cross section values of 208.5 and 205.3 Ang^2 respectively. Although the amplitude of the transient DC voltage in the second region 24 is a factor of four lower than in the first region 22 (i.e. 7.5V as compared to 30V), due to the non-linear relationship between transient DC voltage amplitude and the resulting ion velocity, this leads to a drop in mean drift velocity of the two types of ions from around 35m/s in the first region 22 of the ion guide to around 2 m/s in the second region 24.

The ion peaks were modelled as starting 70mm apart, with a 30mm standard deviation in their position. The approximate peak separation is defined as the difference between the mean positions of the peaks divided by the mean of the ion packet position standard deviations. This gives a value of 70/30 = 2.33 as the initial peak separation. The mean position of the leading ion peak (i.e. the most downstream peak) was modelled as being created 522mm from the upstream end of the second region 24 (which is located at 0mm Figs. 3-10).

Fig. 3 shows plots of the intensities of the reverse peptide ions as a function of position along the ion guide at 12ms. It can be seen that the leading edge of the ion peak for the SDGRG ions is just starting to enter the second region 24 (the upstream end of which is located at 0mm). The peak separation at this point in time is 84/31 = 2.71.

Fig. 4 shows plots of the intensities of the reverse peptide ions as a function of position along the ion guide at 16.5ms. At this time it can be see that the peak for the SDGRG ions is almost entirely within the second region 24 (i.e. downstream of 0mm) and has been spatially compressed in a direction along the ion guide 2. The leading part of the peak for the GRGDS ions is within the second region 24 and has been compressed, but the upstream end of the peak has not yet entered the second region 24.

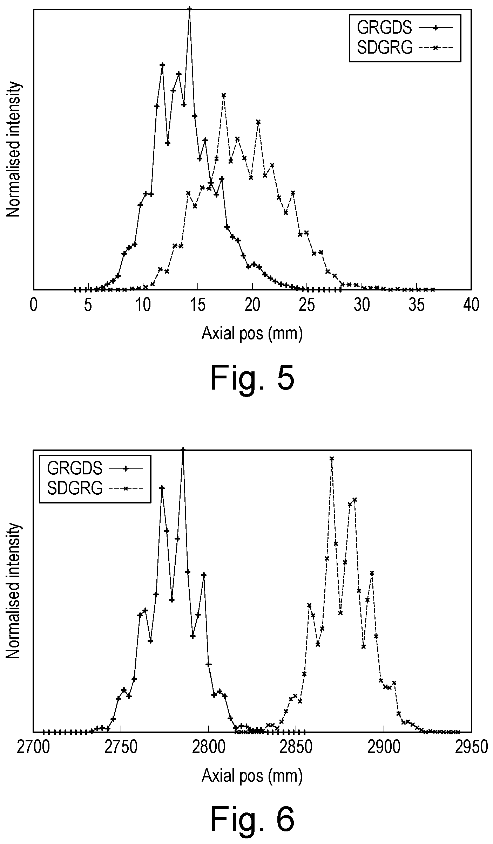

Fig. 5 shows plots of the intensities of the reverse peptide ions as a function of position along the ion guide at 21ms. It can be see that the peaks for both types of ions are now entirely within the second region 24. At this point, the amplitude of the transient DC voltage passing through the second region 24 was modelled as being switched to 30V so as to match the amplitude of the transient DC voltage passing through the first region 22 and third region 26 of the ion guide. At this point in time the peak separation was 5.4/3.7 = 1.46. It can be seen from Fig. 5 that in this example the second region 24 needed to be around 30mm long or more in order for both peaks to be within the second region 24 before the amplitude of the transient DC voltage was changed. In general, the minimum length of the second region 24 depends on the initial length and separation of the ion peaks and the compression ratio (i.e. the ratio of the average velocity of those ions in the first region 22 to the average velocity of those ions in the second region 24).

Fig. 6 shows plots of the intensities of the reverse peptide ions as a function of position along the ion guide at 100ms, i.e. after 79ms of mobility separation since the end of the compression. It can be seen that the mean positions of the two peaks are separated by 97.1mm and the peaks are baseline separated, and that the peak width (standard deviation) is ~15mm. Peak separation is therefore 97.1/15 = 6.5, which is more than double the initial separation, while the peak widths are still only half of their original value. The peaks have therefore been mobility separated whilst counteracting peak broadening and reducing peak width.

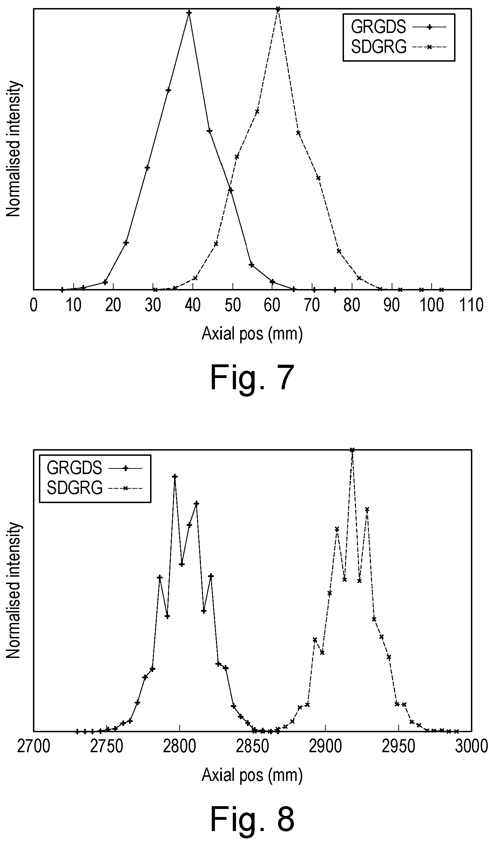

Figs. 7 and 8 show plots corresponding to those of Figs. 5 and 6, respectively, except wherein the DC travelling voltage was modelled as having an amplitude of 15V inside the second region 24 (rather than 7.5V). This leads to a drop in mean velocity for the two types of ions from around 35 m/s in the first region 22 to around 8.5 m/s in the second region 24. From Fig. 7 it can be seen that the peak separation at 21ms is 22.6/8 = 2.8. The reduced compression ratio (relative to that in Fig. 5) leads to a smaller loss in peak separation, but a lower level of peak compression is obtained. In Fig. 7 the compressed peaks are about twice as large as those in Fig. 5, and require the compression region to have a length of about 90mm or more. From Fig. 8 it can be seen that the peak separation at 100 ms is 113.7/16.4 = 6.9.

The ideal choice of compression ratio may depend on the species being separated, the initial widths of the peaks and the geometry of the system. For example, the example peak widths given above are relatively small relative to the path length of a single cycle around the closed loop IMS device being modelled (~1m).

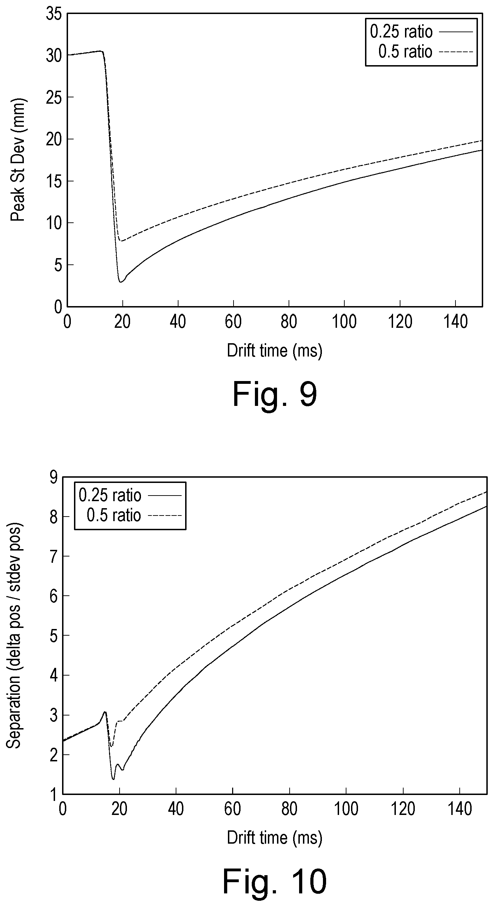

Fig. 9 shows a plot of the mean standard deviation (widths) of the two ion peaks as a function of separation time in the IMS device when the DC travelling potentials were modelled as having an amplitude of 7.5V inside the second region 24 (i.e. a compression ratio of 0.25), and a plot of the mean standard deviation (widths) of the two ion peaks as a function of separation time in the IMS device when the DC travelling potentials were modelled as having an amplitude of 15V inside the second region 24 (i.e. a compression ratio of 0.5).

Fig. 10 shows a plot of the peak separation as a function of separation time in the IMS device when the DC travelling potentials were modelled as having an amplitude of 7.5V inside the second region 24 (i.e. a compression ratio of 0.25), and a plot of the peak separation as a function of separation time in the IMS device when the DC travelling potentials were modelled as having an amplitude of 15V inside the second region 24 (i.e. a compression ratio of 0.5).

It is clear from Figs. 9-10 that although the technique described above may result in some loss of peak separation during the compression (Fig. 10), the peak width is significantly reduced (Fig. 9). It can be seen from Fig. 10 that in the example having a compression ratio of 0.25 the initial peak separation is recovered by 40ms, at which time the ion peaks are nearly 6 times smaller than their initial width (Fig. 9).

Although the present invention has been described with reference to various embodiments, it will be understood by those skilled in the art that various changes in form and detail may be made without departing from the scope of the invention as set forth in the accompanying claims.

For example, although the ion guide has been described as being a closed-loop ion guide of ovoid shape, the ion guiding path may alternatively be circular, rectangular or another shape. Alternatively, the closed-loop ion guide may have a tortuous ion guiding path, such as a serpentine shaped ion guiding path configured such that ions can loop around the serpentine path multiple times.

Although ions have been described as being cycled around a closed-loop ion guide multiple times, it is alternatively contemplated that they may be cycled only once, or partially (less than once) around the ion guide.

Although the ion guide has been described above as being a closed-loop ion guide, it is contemplated that the ion guide need not be closed-looped and may be open-ended. For example, the ion guide may be a linear ion guide. Ions may, or may not, be reflected back and forth along the ion guide.

Although the second region of the ion guide at which the compression occurs has been described as being in a fixed location, it is alternatively contemplated that the second region may move along the ion guide with time. For example, the location of the second region (and hence peak compression) may track the location of an ion peak along the ion guide.

It is contemplated that the ion guide has a plurality of regions corresponding to the second region, i.e. multiple peak compression regions.

The embodiments described above relate to ion mobility separation. However, it is contemplated that the ions may be separated by mass to charge ratio (or a mixture of mass to charge ratio and mobility separation).

Although embodiments have been described in which the ion peaks are compressed by changing one or more property of a transient DC voltage as it travels through a second region of the ion guide (relative to the properties in the first region), it is contemplated that alternatively the ion peaks may be spatially expanded by changing one or more property of the transient DC voltage as it travels through the second region of the ion guide (relative to the properties in the first region).

## Claims

1. A method of separating ions according to a physicochemical property, wherein the physicochemical property is ion mobility or mass to charge ratio, the method comprising:
repeatedly travelling a transient DC voltage along an ion guide (2);
wherein the transient DC voltage has a first amplitude and first speed whilst it travels along a first region (22) of the ion guide (2) so as to urge ions having different values of said physicochemical property through said first region (22) of the ion guide (2) with different average speeds;
wherein, in a first mode, the transient DC voltage is travelled along a second region (24) of the ion guide (2) that is adjacent to said first region: (i) whilst having a second different amplitude; and/or (ii) at a second different non-zero speed; and/or (iii) at a substantially constant speed but with a different frequency to which it is repeatedly travelled along the first region (22); so that ions having a given value of said physicochemical property are urged through said second region (24) of the ion guide (2) at a lower average speed than they are urged through the first region (22), thereby causing the ions to be spatially compressed as they pass from the first region (22) of the ion guide (2) to the second region (24); and
wherein the ion guide (2) comprises a plurality of electrodes (8) spaced along its longitudinal axis and each time the transient DC voltage is travelled along the ion guide (2), the transient DC voltage is successively applied to different electrodes (8), or is successively applied to different groups (5) of multiple electrodes, along the second region (24) of the ion guide (2) so that the transient DC voltage moves along the second region (24) of the ion guide (2) with a substantially constant speed.

2. The method of claim 1, wherein:
(i) the transient DC voltage is applied to each of said different electrodes (8), or each of said groups (5) of multiple electrodes, for substantially the same period of time, optionally during the entirety of the period that the transient DC voltage is travelled along the second region (24); and/or
(ii) the duration of time between the transient DC voltage being applied to any given one of the electrodes (8) in the second region (24) and the next electrode (8) in the second region (24) that it is applied to is substantially the same whilst the transient DC voltage moves along the second region (24) of the ion guide (2); and/or
(iii) the duration of time between the transient DC voltage being applied to any given one of the groups (5) of electrodes in the second region (24) and the next group (5) of electrodes in the second region (24) that it is applied to is substantially the same whilst the transient DC voltage moves along the second region (24) of the ion guide (2).

3. The method of any preceding claim, wherein in the first mode the amplitude of the transient DC voltage as it travels through the second region (24 of the ion guide (2) is lower than its amplitude when it travels through the first region (22) of the ion guide (2) so as to perform the step of spatially compressing the ions.

4. The method of any preceding claim, wherein in the first mode the speed of the transient DC voltage along the second region (24) is higher than its speed along the first region (22) so as to cause the step of spatially compressing the ions.

5. The method of any preceding claim, wherein a gas is present in the ion guide (2) with which ions collide when they are urged through the ion guide (2) by the transient DC voltage.

6. The method of any preceding claim, further comprising switching to a second mode in which each time the transient DC voltage travels along the second region (24) of the ion guide (2) it has: a third amplitude; and/or third non-zero speed; and/or different frequency to which it is repeatedly travelled along the second region (24) in the first mode; so that the spatially compressed ions, having any given value of said physicochemical property, are urged through said second region (24) of the ion guide (2) at a higher average speed than they are urged through the second region (24) in the first mode;
optionally wherein:
(i) the third amplitude is higher than the second amplitude and/or the third non-zero speed is lower than the second non-zero speed; and/or
(ii) the third amplitude matches the first amplitude and/or the third non-zero speed matches the first non-zero speed; and/or
(iii) said different frequency matches the frequency that the transient DC voltage is travelled along the first region (22).

7. The method of claim 6, comprising performing said first mode until a plurality of groups of ions having different respective values of said physicochemical property have entered the second region (24) of the ion guide (2) and have been spatially compressed, and then switching to the second mode whilst the plurality of groups of ions are still located within the second region (24) of the ion guide (2).

8. The method of any preceding claim, wherein the transient DC voltage travels along a third region (26) of the ion guide (2) adjacent to and downstream of said second region (24) so as to urge ions having different values of said physicochemical property through said third region (26) with different average speeds;
optionally wherein:
the ion guide comprises a fourth region that is adjacent to and downstream of said third region (26) and wherein, in one mode, the transient DC voltage has an amplitude and/or non-zero speed along a fourth region that is different to its amplitude and/or non-zero speed in the third region (26) so that ions having a given value of said physicochemical property are urged through said fourth region of the ion guide at a lower average speed than they are urged through the third region (26), thereby causing the ions to be spatially compressed as they pass from the third region (26) of the ion guide (2) to the fourth region.

9. The method of any preceding claim, wherein the ion guide (2) is a closed-loop ion guide and the ions are urged around the closed-loop ion guide by the transient DC voltage a plurality of times.

10. The method of any preceding claim, wherein ions are urged along the ion guide such that the same ions pass through the second region (24) multiple times, and wherein the second region (24) is operated in the first mode each of said multiple times such that the ions are spatially compressed as they pass into the second region (24).

11. A method of separating ions according to a physicochemical property, wherein the physicochemical property is ion mobility or mass to charge ratio, the method comprising:
repeatedly travelling a transient DC voltage along an ion guide (2);
wherein the transient DC voltage has a first amplitude and first speed whilst it travels along a first region (22) of the ion guide (2) so as to urge ions having different values of said physicochemical property through said first region (22) of the ion guide (2) with different average speeds; and
wherein, in a first mode, the transient DC voltage is travelled along a second region (24) of the ion guide (2) that is adjacent to said first region (22): (i) whilst having a second different amplitude; and/or (ii) at a second different non-zero speed; and/or (iii) at a substantially constant speed but with a different frequency to which it is repeatedly travelled along the first region (22); so that ions having a given value of said physicochemical property are urged through said second region (24) of the ion guide (2) at a higher average speed than they are urged through the first region (22), thereby causing a group of ions to be spatially expanded as it passes from the first region (22) of the ion guide (2) to the second region (24).

12. An ion separator (1) for separating ions according to a physicochemical property, wherein the physicochemical property is ion mobility or mass to charge ratio, the ion separator (1) comprising:
an ion guide (2) comprising a plurality of electrodes (8);
one or more voltage supply (9) connected to said electrodes (8) for applying transient DC voltages to said electrodes (8); and
electronic circuitry (11) configured to control the one or more voltage supply (9) to successively apply a transient DC voltage to electrodes along the ion guide (2) so as to repeatedly travel a transient DC voltage along the ion guide (2);
wherein the electronic circuitry (11) is configured to control the one or more voltage supply (9) such that the transient DC voltage has a first amplitude and first speed whilst it travels along a first region (22) of the ion guide (2) for urging ions having different values of said physicochemical property through said first region (22) of the ion guide (2) with different average speeds;
wherein the electronic circuitry (11) is configured to control the one or more voltage supply (9) such that, in a first mode, the transient DC voltage is travelled along a second region (24) of the ion guide that is adjacent to said first region: (i) whilst having a second different amplitude; and/or (ii) at a second different non-zero speed; and/or (iii) at a substantially constant speed but with a different frequency to which it is repeatedly travelled along the first region (22); for urging ions having a given value of said physicochemical property through said second region (24) of the ion guide (2) at a lower average speed than they are urged through the first region (22), thereby causing the ions to be spatially compressed as they pass from the first region (22) of the ion guide (2) to the second region (24); and
wherein the plurality of electrodes (8) are spaced along a longitudinal axis of the ion guide (2) and the electronic circuitry (11) is configured to control the one or more voltage supply (9) such that, each time the transient DC voltage is travelled along the ion guide (2) in the first mode, the transient DC voltage is successively applied to different electrodes (8), or is successively applied to different groups (5) of multiple electrodes, along the second region (24) of the ion guide (2) so that the transient DC voltage moves along the second region (24) of the ion guide (2) with a substantially constant speed.

13. An ion separator (1) for separating ions according to a physicochemical property, wherein the physicochemical property is ion mobility or mass to charge ratio, the ion separator (1) comprising:
an ion guide (2) comprising a plurality of electrodes (8);
one or more voltage supply (9) connected to said electrodes (8) for applying transient DC voltages to said electrodes (8); and
electronic circuitry (11) configured to control the one or more voltage supply (9) to successively apply a transient DC voltage to electrodes (8) along the ion guide (2) so as to repeatedly travel a transient DC voltage along the ion guide (2);
wherein the electronic circuitry (11) is configured to control the one or more voltage supply (9) such that the transient DC voltage has a first amplitude and first speed whilst it travels along a first region (22) of the ion guide (2) for urging ions having different values of said physicochemical property through said first region (22) of the ion guide (2) with different average speeds; and
wherein the electronic circuitry (11) is configured to control the one or more voltage supply (9) such that, in a first mode, the transient DC voltage is travelled along a second region (24) of the ion guide (2) that is adjacent to said first region (22): (i) whilst having a second different amplitude; and/or (ii) at a second different non-zero speed; and/or (iii) at a substantially constant speed but with a different frequency to which it is repeatedly travelled along the first region (22); for urging ions having a given value of said physicochemical property through said second region (24) of the ion guide (2) at a higher average speed than they are urged through the first region (22), thereby causing a group of ions to be spatially expanded as it passes from the first region (22) of the ion guide (2) to the second region (24).

## Patentansprüche

1. Verfahren zum Trennen von Ionen gemäß einer physikalisch-chemischen Eigenschaft, wobei die physikalisch-chemische Eigenschaft eine lonenmobilität oder ein Masse-zu-Ladungs-Verhältnis ist, wobei das Verfahren umfasst:
wiederholtes Entlangführen einer transienten Gleichspannung an einen lonenleiter (2);
wobei die transiente Gleichspannung eine erste Amplitude und eine erste Geschwindigkeit aufweist, während sie entlang eines ersten Bereichs (22) des Ionenleiters (2) wandert, um Ionen mit unterschiedlichen Werten der physikalisch-chemischen Eigenschaft mit unterschiedlichen Durchschnittsgeschwindigkeiten durch den ersten Bereich (22) des Ionenleiters (2) zu treiben;
wobei in einem ersten Modus die transiente Gleichspannung entlang eines zweiten Bereichs (24) des Ionenleiters (2) entlanggeführt wird, der an den ersten Bereich angrenzt: (i) während sie eine zweite unterschiedliche Amplitude aufweist; und/oder (ii) mit einer zweiten unterschiedlichen Geschwindigkeit ungleich Null; und/oder (iii) mit einer im Wesentlichen konstanten Geschwindigkeit, jedoch mit einer unterschiedlichen Frequenz, mit der sie wiederholt entlang des ersten Bereichs (22) geführt wird; so dass Ionen mit einem bestimmten Wert der physikalisch-chemischen Eigenschaft durch den zweiten Bereich (24) des Ionenleiters (2) mit einer geringeren Durchschnittsgeschwindigkeit getrieben werden als sie durch den ersten Bereich (22) getrieben werden, wodurch die Ionen beim Übergang vom ersten Bereich (22) des Ionenleiters (2) in den zweiten Bereich (24) räumlich komprimiert werden; und
wobei der Ionenleiter (2) eine Vielzahl von Elektroden (8) umfasst, die entlang seiner Längsachse beabstandet sind, und jedes Mal, wenn die transiente Gleichspannung entlang des Ionenleiters (2) geführt wird, die transiente Gleichspannung nacheinander an verschiedene Elektroden (8) angelegt wird, oder nacheinander an verschiedene Gruppen (5) von mehreren Elektroden entlang des zweiten Bereichs (24) des Ionenleiters (2) angelegt wird, so dass sich die transiente Gleichspannung mit einer im Wesentlichen konstanten Geschwindigkeit entlang des zweiten Bereichs (24) des Ionenleiters (2) bewegt.

2. Verfahren nach Anspruch 1, wobei:
(i) die transiente Gleichspannung an jede der verschiedenen Elektroden (8) oder an jede der Gruppen (5) von mehreren Elektroden für im Wesentlichen den gleichen Zeitraum angelegt wird, gegebenenfalls während des gesamten Zeitraums, in dem die transiente Gleichspannung den zweiten Bereich (24) durchläuft; und/oder
(ii) der Zeitraum zwischen einem Anlegen der transienten Gleichspannung an eine beliebige der Elektroden (8) im zweiten Bereich (24) und der nächsten Elektrode (8) im zweiten Bereich (24), an die sie angelegt wird, im Wesentlichen gleich ist, während sich die transiente Gleichspannung entlang des zweiten Bereichs (24) des Ionenleiters (2) bewegt; und/oder
(iii) der Zeitraum zwischen einem Anlegen der transienten Gleichspannung an eine beliebige der Gruppen (5) von Elektroden im zweiten Bereich (24) und der nächsten Gruppe (5) von Elektroden im zweiten Bereich (24), an die sie angelegt wird, im Wesentlichen gleich ist, während sich die transiente Gleichspannung entlang des zweiten Bereichs (24) des Ionenleiters (2) bewegt.

3. Verfahren nach einem vorstehenden Anspruch, wobei im ersten Modus die Amplitude der transienten Gleichspannung beim Durchlaufen des zweiten Bereichs (24 des Ionenleiters (2) geringer ist als ihre Amplitude beim Durchlaufen des ersten Bereichs (22) des Ionenleiters (2), um den Schritt eines räumlichen Komprimierens der Ionen durchzuführen.

4. Verfahren nach einem vorstehenden Anspruch, wobei im ersten Modus die Geschwindigkeit der transienten Gleichspannung entlang des zweiten Bereichs (24) höher ist als ihre Geschwindigkeit entlang des ersten Bereichs (22), um so den Schritt eines räumlichen Komprimierens der Ionen zu bewirken.

5. Verfahren nach einem vorstehenden Anspruch, wobei in dem Ionenleiter (2) ein Gas vorhanden ist, mit dem die Ionen kollidieren, wenn sie durch den Ionenleiter (2) von der transienten Gleichspannung getrieben werden.

6. Verfahren nach einem vorstehenden Anspruch, weiter umfassend ein Umschalten in einen zweiten Modus, in dem die transiente Gleichspannung jedes Mal, wenn sie entlang des zweiten Bereichs (24) des Ionenleiters (2) geführt wird, aufweist: eine dritte Amplitude; und/oder eine dritte Geschwindigkeit ungleich Null; und/oder eine unterschiedliche Frequenz, mit der sie im ersten Modus wiederholt durch den zweiten Bereich (24) entlanggeführt wird; so dass die räumlich komprimierten Ionen, die einen beliebigen Wert der physikalisch-chemischen Eigenschaft aufweisen, mit einer höheren Durchschnittsgeschwindigkeit durch den zweiten Bereich (24) des Ionenleiters (2) getrieben werden, als sie durch den zweiten Bereich (24) im ersten Modus getrieben werden;
wobei optional:
(i) die dritte Amplitude größer ist als die zweite Amplitude und/oder die dritte Geschwindigkeit ungleich Null kleiner ist als die zweite Geschwindigkeit ungleich Null; und/oder
(ii) die dritte Amplitude der ersten Amplitude entspricht und/oder die dritte Geschwindigkeit ungleich Null der ersten Geschwindigkeit ungleich Null entspricht; und/oder
(iii) die unterschiedliche Frequenz der Frequenz entspricht, mit der die transiente Gleichspannung entlang des ersten Bereichs (22) entlanggeführt wird.

7. Verfahren nach Anspruch 6, umfassend das Durchführen des ersten Modus so lange, bis eine Vielzahl von Ionengruppen mit jeweils unterschiedlichen Werten der physikalisch-chemischen Eigenschaft in den zweiten Bereich (24) des Ionenleiters (2) eingetreten ist und räumlich komprimiert wurde, und anschließend das Umschalten auf den zweiten Modus, während sich die Vielzahl von Ionengruppen noch im zweiten Bereich (24) des Ionenleiters (2) befindet.

8. Verfahren nach einem vorstehenden Anspruch, wobei die transiente Gleichspannung entlang eines dritten Bereichs (26) des Ionenleiters (2) geführt wird, der an den zweiten Bereich (24) angrenzt und diesem nachgeschaltet ist, um Ionen mit unterschiedlichen Werten der physikalisch-chemischen Eigenschaft mit unterschiedlichen Durchschnittsgeschwindigkeiten durch den dritten Bereich (26) zu treiben;
wobei optional:
der Ionenleiter einen vierten Bereich umfasst, der an den dritten Bereich (26) angrenzt und diesem nachgeschaltet ist, und wobei in einem Modus die transiente Gleichspannung entlang des vierten Bereichs eine Amplitude und/oder eine Geschwindigkeit ungleich Null aufweist, die sich von ihrer Amplitude und/oder einer Geschwindigkeit ungleich Null im dritten Bereich (26) unterscheidet, so dass Ionen mit einem bestimmten Wert der physikalisch-chemischen Eigenschaft durch den vierten Bereich des Ionenleiters mit einer geringeren Durchschnittsgeschwindigkeit getrieben werden als sie durch den dritten Bereich (26) getrieben werden, wodurch bewirkt wird, dass die Ionen beim Übergang vom dritten Bereich (26) des Ionenleiters (2) in den vierten Bereich räumlich komprimiert werden.

9. Verfahren nach einem vorstehenden Anspruch, wobei der Ionenleiter (2) ein geschlossener Ionenleiter ist und die Ionen durch die transiente Gleichspannung mehrmals um den geschlossenen Ionenleiter getrieben werden.

10. Verfahren nach einem vorstehenden Anspruch, wobei Ionen entlang des Ionenleiters so getrieben werden, dass dieselben Ionen den zweiten Bereich (24) mehrfach durchlaufen, und wobei der zweite Bereich (24) bei jedem der mehrfachen Durchläufe im ersten Modus betrieben wird, so dass die Ionen beim Eintritt in den zweiten Bereich (24) räumlich komprimiert werden.

11. Verfahren zum Trennen von Ionen gemäß einer physikalisch-chemischen Eigenschaft, wobei die physikalisch-chemische Eigenschaft eine lonenmobilität oder ein Masse-zu-Ladungs-Verhältnis ist, wobei das Verfahren umfasst:
wiederholtes Entlangführen einer transienten Gleichspannung an einen lonenleiter (2);
wobei die transiente Gleichspannung eine erste Amplitude und eine erste Geschwindigkeit aufweist, während sie entlang eines ersten Bereichs (22) des Ionenleiters (2) wandert, um Ionen mit unterschiedlichen Werten der physikalisch-chemischen Eigenschaft mit unterschiedlichen Durchschnittsgeschwindigkeiten durch den ersten Bereich (22) des Ionenleiters (2) zu treiben; und
wobei in einem ersten Modus die transiente Gleichspannung entlang eines zweiten Bereichs (24) des Ionenleiters (2) geleitet wird, der an den ersten Bereich (22) angrenzt: (i) während sie eine zweite unterschiedliche Amplitude aufweist; und/oder (ii) mit einer zweiten unterschiedlichen Geschwindigkeit ungleich Null; und/oder (iii) mit einer im Wesentlichen konstanten Geschwindigkeit, jedoch mit einer unterschiedlichen Frequenz, mit der sie wiederholt entlang des ersten Bereichs (22) geführt wird; so dass Ionen mit einem bestimmten Wert der physikalisch-chemischen Eigenschaft durch den zweiten Bereich (24) des lonenleiters (2) mit einer höheren Durchschnittsgeschwindigkeit getrieben werden als sie durch den ersten Bereich (22) getrieben werden, wodurch eine Gruppe von Ionen beim Übergang vom ersten Bereich (22) des lonenleiters (2) in den zweiten Bereich (24) räumlich ausgebreitet werden.

12. lonenseparator (1) zum Trennen von Ionen gemäß einer physikalisch-chemischen Eigenschaft, wobei die physikalisch-chemische Eigenschaft eine lonenmobilität oder ein Masse-zu-Ladungs-Verhältnis ist, wobei der lonenseparator (1) umfasst:
einen lonenleiter (2), der eine Vielzahl von Elektroden (8) umfasst;
eine oder mehrere Spannungsversorgungen (9), die mit den Elektroden (8) verbunden sind, um an die Elektroden (8) transiente Gleichspannungen anzulegen; und
eine elektronische Schaltung (11), die so ausgebildet ist, dass sie die eine oder mehreren Spannungsversorgungen (9) so steuert, dass nacheinander eine transiente Gleichspannung an Elektroden entlang des Ionenleiters (2) angelegt wird, um wiederholt eine transiente Gleichspannung entlang des Ionenleiters (2) zu führen;
wobei die elektronische Schaltung (11) so ausgebildet ist, dass sie die eine oder mehreren Spannungsversorgungen (9) so steuert, dass die transiente Gleichspannung eine erste Amplitude und eine erste Geschwindigkeit aufweist, während sie entlang eines ersten Bereichs (22) des Ionenleiters (2) geführt wird, um Ionen mit unterschiedlichen Werten der physikalisch-chemischen Eigenschaft mit unterschiedlichen Durchschnittsgeschwindigkeiten durch den ersten Bereich (22) des Ionenleiters (2) zu treiben;
wobei die elektronische Schaltung (11) so ausgebildet ist, dass sie die eine oder mehreren Spannungsversorgungen (9) so steuert, dass in einem ersten Modus die transiente Gleichspannung entlang eines zweiten Bereichs (24) des Ionenleiters geführt wird, der an den ersten Bereich angrenzt: (i) während sie eine zweite unterschiedliche Amplitude aufweist; und/oder (ii) mit einer zweiten unterschiedlichen Geschwindigkeit ungleich Null; und/oder (iii) mit einer im Wesentlichen konstanten Geschwindigkeit, jedoch mit einer unterschiedlichen Frequenz, mit der sie wiederholt entlang des ersten Bereichs (22) geführt wird; um Ionen mit einem bestimmten Wert der physikalisch-chemischen Eigenschaft durch den zweiten Bereich (24) des Ionenleiters (2) mit einer geringeren Durchschnittsgeschwindigkeit zu treiben als sie durch den ersten Bereich (22) getrieben werden, wodurch die Ionen beim Übergang vom ersten Bereich (22) des Ionenleiters (2) in den zweiten Bereich (24) räumlich komprimiert werden; und
wobei die Vielzahl von Elektroden (8) entlang einer Längsachse des Ionenleiters (2) beabstandet sind und die elektronische Schaltung (11) so ausgebildet ist, dass sie die eine oder die mehreren Spannungsversorgungen (9) so steuert, dass jedes Mal, wenn die transiente Gleichspannung im ersten Modus entlang des Ionenleiters (2) geführt wird, sie nacheinander an verschiedene Elektroden (8) angelegt wird, oder sie nacheinander an verschiedene Gruppen (5) von mehreren Elektroden entlang des zweiten Bereichs (24) des Ionenleiters (2) angelegt wird, so dass die transiente Gleichspannung mit einer im Wesentlichen konstanten Geschwindigkeit entlang des zweiten Bereichs (24) des Ionenleiters (2) geführt wird.

13. lonenseparator (1) zum Trennen von Ionen gemäß einer physikalisch-chemischen Eigenschaft, wobei die physikalisch-chemische Eigenschaft eine lonenmobilität oder ein Masse-zu-Ladungs-Verhältnis ist, wobei der lonenseparator (1) umfasst:
einen lonenleiter (2), der eine Vielzahl von Elektroden (8) umfasst;
eine oder mehrere Spannungsversorgungen (9), die mit den Elektroden (8) verbunden sind, um an die Elektroden (8) transiente Gleichspannungen anzulegen; und
eine elektronische Schaltung (11), die so ausgebildet ist, dass sie die eine oder mehreren Spannungsversorgungen (9) so steuert, dass nacheinander eine transiente Gleichspannung an Elektroden (8) entlang des Ionenleiters (2) angelegt wird, um wiederholt eine transiente Gleichspannung entlang des Ionenleiters (2) zu führen;
wobei die elektronische Schaltung (11) so ausgebildet ist, dass sie die eine oder mehreren Spannungsversorgungen (9) so steuert, dass die transiente Gleichspannung eine erste Amplitude und eine erste Geschwindigkeit aufweist, während sie entlang eines ersten Bereichs (22) des Ionenleiters (2) geführt wird, um Ionen mit unterschiedlichen Werten der physikalisch-chemischen Eigenschaft mit unterschiedlichen Durchschnittsgeschwindigkeiten durch den ersten Bereich (22) des Ionenleiters (2) zu treiben; und
wobei die elektronische Schaltung (11) so ausgebildet ist, dass sie die eine oder mehreren Spannungsversorgungen (9) so steuert, dass in einem ersten Modus die transiente Gleichspannung entlang eines zweiten Bereichs (24) des Ionenleiters (2) geführt wird, der an den ersten Bereich (22) angrenzt: (i) während sie eine zweite unterschiedliche Amplitude aufweist; und/oder (ii) mit einer zweiten unterschiedlichen Geschwindigkeit ungleich Null; und/oder (iii) mit einer im Wesentlichen konstanten Geschwindigkeit, jedoch mit einer unterschiedlichen Frequenz, mit der sie wiederholt entlang des ersten Bereichs (22) geführt wird; um Ionen mit einem bestimmten Wert der physikalisch-chemischen Eigenschaft durch den zweiten Bereich (24) des Ionenleiters (2) mit einer höheren Durchschnittsgeschwindigkeit zu treiben als sie durch den ersten Bereich (22) getrieben werden, wodurch eine Gruppe von Ionen beim Übergang vom ersten Bereich (22) des Ionenleiters (2) in den zweiten Bereich (24) räumlich ausgebreitet wird.

## Revendications

1. Procédé de séparation d'ions selon une propriété physico-chimique, dans lequel la propriété physico-chimique est la mobilité ionique ou le rapport masse sur charge, le procédé comprenant :
le déplacement de façon répétée d'une tension CC transitoire le long d'un guide d'ions (2) ;
dans lequel la tension CC transitoire présente une première amplitude et une première vitesse tandis qu'elle se déplace le long d'une première région (22) du guide d'ions (2) de façon à pousser des ions présentant différentes valeurs de ladite propriété physico-chimique à travers ladite première région (22) du guide d'ions (2) à des vitesses moyennes différentes ;
dans lequel, dans un premier mode, la tension CC transitoire est déplacée le long d'une deuxième région (24) du guide d'ions (2) qui est adjacente à ladite première région : (i) tandis qu'elle présente une deuxième amplitude différente ; et/ou (ii) à une deuxième vitesse non nulle différente ; et/ou (iii) à une vitesse sensiblement constante mais à une fréquence différente de celle à laquelle elle est déplacée de façon répétée le long de la première région (22) ; de sorte que des ions présentant une valeur donnée de ladite propriété physico-chimique soient poussés à travers ladite deuxième région (24) du guide d'ions (2) à une vitesse moyenne inférieure à celle à laquelle ils sont poussés à travers la première région (22), ce qui amène les ions à être spatialement comprimés lorsqu'ils passent de la première région (22) du guide d'ions (2) à la deuxième région (24) ; et
dans lequel le guide d'ions (2) comprend une pluralité d'électrodes (8) espacées le long de son axe longitudinal et, chaque fois que la tension CC transitoire est déplacée le long du guide d'ions (2), la tension CC transitoire est successivement appliquée à des électrodes (8) différentes, ou est successivement appliquée à différents groupes (5) de multiples électrodes, le long de la deuxième région (24) du guide d'ions (2) de sorte que la tension CC transitoire se déplace le long de la deuxième région (24) du guide d'ions (2) à une vitesse sensiblement constante.

2. Procédé selon la revendication 1, dans lequel :
(i) la tension CC transitoire est appliquée à chacune desdites électrodes (8) différentes, ou à chacun desdits groupes (5) de multiples électrodes, pendant sensiblement la même période temporelle, facultativement pendant la totalité de la période pendant laquelle la tension CC transitoire est déplacée le long de la deuxième région (24) ; et/ou
(ii) la durée entre le moment auquel la tension CC transitoire est appliquée à une quelconque électrode donnée parmi les électrodes (8) dans la deuxième région (24) et l'électrode (8) suivante dans la deuxième région (24) à laquelle elle est appliquée est sensiblement la même tandis que la tension CC transitoire se déplace le long de la deuxième région (24) du guide d'ions (2) ; et/ou
(iii) la durée entre le moment auquel la tension CC transitoire est appliquée à un quelconque groupe donné parmi les groupes (5) d'électrodes dans la deuxième région (24) et le groupe (5) d'électrode suivant dans la deuxième région (24) auquel elle est appliquée est sensiblement la même tandis que la tension CC transitoire se déplace le long de la deuxième région (24) du guide d'ions (2).

3. Procédé selon une quelconque revendication précédente, dans lequel, dans le premier mode, l'amplitude de la tension CC transitoire lorsqu'elle se déplace à travers la deuxième région (24) du guide d'ions (2) est inférieure à son amplitude lorsqu'elle se déplace à travers la première région (22) du guide d'ions (2) de façon à réaliser l'étape de compression spatiale des ions.

4. Procédé selon une quelconque revendication précédente, dans lequel, dans le premier mode, la vitesse de la tension CC transitoire le long de la deuxième région (24) est supérieure à sa vitesse le long de la première région (22) de façon à provoquer l'étape de compression spatiale des ions.

5. Procédé selon une quelconque revendication précédente, dans lequel un gaz est présent dans le guide d'ions (2) avec lequel les ions entrent en collision lorsqu'ils sont poussés à travers le guide d'ions (2) par la tension CC transitoire.

6. Procédé selon une quelconque revendication précédente, comprenant en outre la commutation vers un deuxième mode dans lequel, chaque fois que la tension CC transitoire se déplace le long de la deuxième région (24) du guide d'ions (2), elle présente : une troisième amplitude ; et/ou
une troisième vitesse non nulle ; et/ou une fréquence différente de celle à laquelle elle est déplacée de façon répétée le long de la deuxième région (24) dans le premier mode ; de sorte que les ions spatialement compressés, présentant une quelconque valeur donnée de ladite propriété physico-chimique, soient poussés à travers ladite deuxième région (24) du guide d'ions (2) à une vitesse moyenne supérieure à celle à laquelle ils sont poussés à travers la deuxième région (24) dans le premier mode ;
facultativement dans lequel :
(i) la troisième amplitude est supérieure à la deuxième amplitude et/ou la troisième vitesse non nulle est inférieure à la deuxième vitesse non nulle ; et/ou
(ii) la troisième amplitude concorde avec la première amplitude et/ou la troisième vitesse non nulle concorde avec la première vitesse non nulle ; et/ou
(iii) ladite fréquence différente concorde avec la fréquence à laquelle la tension CC transitoire est déplacée le long de la première région (22).

7. Procédé selon la revendication 6, comprenant la réalisation dudit premier mode jusqu'à ce qu'une pluralité de groupes d'ions présentant différentes valeurs respectives de ladite propriété physico-chimique aient pénétré dans la deuxième région (24) du guide d'ions (2) et aient été spatialement compressés, puis la commutation vers le deuxième mode tandis que la pluralité de groupes d'ions sont encore situés au sein de la deuxième région (24) du guide d'ions (2).

8. Procédé selon une quelconque revendication précédente, dans lequel la tension CC transitoire se déplace le long d'une troisième région (26) du guide d'ions (2) adjacente à ladite deuxième région (24) et en aval de celle-ci de façon à pousser des ions présentant différentes valeurs de ladite propriété physico-chimique à travers ladite troisième région (26) à des vitesses moyennes différentes ;
facultativement dans lequel :
le guide d'ions comprend une quatrième région qui est adjacente à ladite troisième région (26) et en aval de celle-ci et dans lequel, dans un mode, la tension CC transitoire présente une amplitude et/ou une vitesse non nulle le long d'une quatrième région qui sont différentes de son amplitude et/ou de sa vitesse non nulle dans la troisième région (26) de sorte que des ions présentant une valeur donnée de ladite propriété physico-chimique soient poussés à travers ladite quatrième région du guide d'ions à une vitesse moyenne inférieure à celle à laquelle ils sont poussés à travers la troisième région (26), ce qui amène les ions à être spatialement comprimés lorsqu'ils passent de la troisième région (26) du guide d'ions (2) à la quatrième région.

9. Procédé selon une quelconque revendication précédente, dans lequel le guide d'ions (2) est un guide d'ions en boucle fermée et les ions sont poussés autour du guide d'ions en boucle fermée par la tension CC transitoire une pluralité de fois.

10. Procédé selon une quelconque revendication précédente, dans lequel les ions sont poussés le long du guide d'ions de sorte que les mêmes ions passent à travers la deuxième région (24) de multiples fois, et dans lequel la deuxième région (24) fonctionne dans le premier mode chacune desdites multiples fois de sorte que les ions soient spatialement comprimés lorsqu'ils passent dans la deuxième région (24).

11. Procédé de séparation d'ions selon une propriété physico-chimique, dans lequel la propriété physico-chimique est la mobilité ionique ou le rapport masse sur charge, le procédé comprenant :
le déplacement de façon répétée d'une tension CC transitoire le long d'un guide d'ions (2) ;
dans lequel la tension CC transitoire présente une première amplitude et une première vitesse tandis qu'elle se déplace le long d'une première région (22) du guide d'ions (2) de façon à pousser des ions présentant différentes valeurs de ladite propriété physico-chimique à travers ladite première région (22) du guide d'ions (2) à des vitesses moyennes différentes ; et
dans lequel, dans un premier mode, la tension CC transitoire est déplacée le long d'une deuxième région (24) du guide d'ions (2) qui est adjacente à ladite première région (22) : (i) tandis qu'elle présente une deuxième amplitude différente ; et/ou (ii) à une deuxième vitesse non nulle différente ; et/ou (iii) à une vitesse sensiblement constante mais à une fréquence différente de celle à laquelle elle est déplacée de façon répétée le long de la première région (22) ; de sorte que des ions présentant une valeur donnée de ladite propriété physico-chimique soient poussés à travers ladite deuxième région (24) du guide d'ions (2) à une vitesse moyenne supérieure à celle à laquelle ils sont poussés à travers la première région (22), ce qui amène un groupe d'ions à être spatialement étendu lorsqu'il passe de la première région (22) du guide d'ions (2) à la deuxième région (24).

12. Séparateur d'ions (1) pour la séparation d'ions selon une propriété physico-chimique, dans lequel la propriété physico-chimique est la mobilité ionique ou le rapport masse sur charge, le séparateur d'ions (1) comprenant :
un guide d'ions (2) comprenant une pluralité d'électrodes (8) ;
une ou plusieurs alimentations en tension (9) connectées auxdites électrodes (8) pour l'application de tensions CC transitoires auxdites électrodes (8) ; et
une circuiterie électronique (11) configurée pour commander les une ou plusieurs alimentations en tension (9) pour appliquer successivement une tension CC transitoire à des électrodes le long du guide d'ions (2) de façon à déplacer de façon répétée une tension CC transitoire le long du guide d'ions (2) ;
dans lequel la circuiterie électronique (11) est configurée pour commander les une ou plusieurs alimentations en tension (9) de sorte que la tension CC transitoire présente une première amplitude et une première vitesse tandis qu'elle se déplace le long d'une première région (22) du guide d'ions (2) pour pousser des ions présentant différentes valeurs de ladite propriété physico-chimique à travers ladite première région (22) du guide d'ions (2) à des vitesses moyennes différentes ;
dans lequel la circuiterie électronique (11) est configurée pour commander les une ou plusieurs alimentations en tension (9) de sorte que, dans un premier mode, la tension CC transitoire soit déplacée le long d'une deuxième région (24) du guide d'ions qui est adjacente à ladite première région : (i) tandis qu'elle présente une deuxième amplitude différente ; et/ou (ii) à une deuxième vitesse non nulle différente ; et/ou (iii) à une vitesse sensiblement constante mais à une fréquence différente de celle à laquelle elle est déplacée de façon répétée le long de la première région (22) ; pour pousser des ions présentant une valeur donnée de ladite propriété physico-chimique à travers ladite deuxième région (24) du guide d'ions (2) à une vitesse moyenne inférieure à celle à laquelle ils sont poussés à travers la première région (22), ce qui amène les ions à être spatialement comprimés lorsqu'ils passent de la première région (22) du guide d'ions (2) à la deuxième région (24) ; et
dans lequel la pluralité d'électrodes (8) sont espacées le long d'un axe longitudinal du guide d'ions (2) et la circuiterie électronique (11) est configurée pour commander les une ou plusieurs alimentations en tension (9) de sorte que, chaque fois que la tension CC transitoire est déplacée le long du guide d'ions (2) dans le premier mode, la tension CC transitoire est successivement appliquée à différentes électrodes (8), ou est successivement appliquée à différents groupes (5) de multiples électrodes, le long de la deuxième région (24) du guide d'ions (2) de sorte que la tension CC transitoire se déplace le long de la deuxième région (24) du guide d'ions (2) à une vitesse sensiblement constante.

13. Séparateur d'ions (1) pour la séparation d'ions selon une propriété physico-chimique, dans lequel la propriété physico-chimique est la mobilité ionique ou le rapport masse sur charge, le séparateur d'ions (1) comprenant :
un guide d'ions (2) comprenant une pluralité d'électrodes (8) ;
une ou plusieurs alimentations en tension (9) connectées auxdites électrodes (8) pour l'application de tensions CC transitoires auxdites électrodes (8) ; et
une circuiterie électronique (11) configurée pour commander les une ou plusieurs alimentations en tension (9) pour appliquer successivement une tension CC transitoire aux électrodes (8) le long du guide d'ions (2) de façon à déplacer de façon répétée une tension CC transitoire le long du guide d'ions (2) ;
dans lequel la circuiterie électronique (11) est configurée pour commander les une ou plusieurs alimentations en tension (9) de sorte que la tension CC transitoire présente une première amplitude et une première vitesse tandis qu'elle se déplace le long d'une première région (22) du guide d'ions (2) pour pousser des ions présentant différentes valeurs de ladite propriété physico-chimique à travers ladite première région (22) du guide d'ions (2) à des vitesses moyennes différentes ; et
dans lequel la circuiterie électronique (11) est configurée pour commander les une ou plusieurs alimentations en tension (9) de sorte que, dans un premier mode, la tension CC transitoire soit déplacée le long d'une deuxième région (24) du guide d'ions (2) qui est adjacente à ladite première région (22) : (i) tandis qu'elle présente une deuxième amplitude différente ; et/ou (ii) à une deuxième vitesse non nulle différente ; et/ou (iii) à une vitesse sensiblement constante mais à une fréquence différente de celle à laquelle elle est déplacée de façon répétée le long de la première région (22) ; pour pousser des ions présentant une valeur donnée de ladite propriété physico-chimique à travers ladite deuxième région (24) du guide d'ions (2) à une vitesse moyenne supérieure à celle à laquelle ils sont poussés à travers la première région (22), ce qui amène un groupe d'ions à être spatialement étendu lorsqu'il passe de la première région (22) du guide d'ions (2) à la deuxième région (24).
